# EUROPÄISCHE PATENTSCHRIFT

(11) **EP 2 914 533 B1**
(45) Veröffentlichungstag und Bekanntmachung des Hinweises auf die Patenterteilung: **14.12.2016**
(21) Anmeldenummer: 13783903.1
(22) Anmeldetag: 28.10.2013
(51) Int. Cl.: B66B 13/14, B66B 13/26

(54) **VORRICHTUNG ZUM VERHINDERN EINER DURCH EINEN KRAFTSPEICHER VERURSACHTEN ÜBERGESCHWINDIGKEIT EINES TÜRBLATTES**
DEVICE FOR PREVENTING THE EXCESS SPEED OF A DOOR LEAF CAUSED BY A POWER STORAGE DEVICE
DISPOSITIF DESTINÉ À EMPÊCHER UN EXCÈS DE VITESSE D'UN VANTAIL CAUSÉ PAR UN ACCUMULATEUR D'ÉNERGIE

(30) Priorität: 30.10.2012 EP 12190478
(43) Veröffentlichungstag der Anmeldung: 09.09.2015
(73) Patentinhaber: Inventio AG, 6052 Hergiswil (CH)
(72) Erfinder: SAX, Peter, CH-8404 Winterthur (CH); STOCKER, Hansueli, CH-6405 Immensee (CH)
(86) Internationale Anmeldenummer: PCT/EP2013/072492
(87) Internationale Veröffentlichungsnummer: WO 2014/067894

(56) Entgegenhaltungen:
- JP-A- 4 133 989
- JP-A- 9 242 418
- JP-A- 11 021 052
- JP-A- 2003 261 281
- JP-A- 2006 197 750

## Beschreibung

Die Erfindung betrifft eine Vorrichtung zum Verhindern einer durch einen Kraftspeicher verursachten Übergeschwindigkeit eines Türblattes, welche in Aufzugsanlagen genutzt werden kann.

Eine Aufzugsanlage umfasst mehrere Schachttüren und eine Kabinentür, wobei sowohl die Schachttüren als auch die Kabinentür jeweils ein Türblatt aufweisen. Eine Schachttür kann durch einen Türantrieb, der an der Kabinentür angeordnet ist, geöffnet bzw. geschlossen werden, wenn die Kabinentür mit der Schachttür gekoppelt ist. Üblicherweise ist an jeder der Schachttüren eine Türschliessvorrichtung angeordnet, um diese Schachttür jederzeit mittels einer Schliesskraft zu schliessen oder geschlossen zu halten.

Im Falle eines Ausfalles der Elektroenergieversorgung bewirkt die Türschliessvorrichtung, dass die geöffnete Schachttür und möglicherweise die mit der Schachttür gekoppelte Kabinentür geschlossen werden. Weil dabei ein Haltemoment des Türantriebes nicht mehr gegeben ist, können die von dieser Türschliessvorrichtung verursachten Beschleunigungskräfte eine über gesetzlichen Grenzwerten liegende kinetische Energie der Türblätter bewirken. Das kann unter Anderem zu einer Gefährdung oder Irritierung von im Bereich der Aufzugstür befindlichen Personen führen.

JP-A-2003261281 zeigt eine Aufzugstür mit einem Türblatt und einem mit dem Türblatt gekoppelten Motor. Bei einem Ausfall der Stromversorgung wird das Türblatt in Schliessrichtung beschleunigt, woraufhin der Motor elektrische Energie generiert. Die elektrische Energie wird mittels Widerständen in Wärme umgewandelt, was zu einer Bremsung des Türblattes führt. Jedoch ist es von Nachteil, derartige kostenintensive Widerstände einsetzen zu müssen. Weiterhin ist es ein Nachteil, dass unabhängig von der Position des Türblattes gebremst wird, was bei einem Stromausfall, welcher bei zumindest teilweise geöffneter Aufzugstür eintritt, zu langen Schliesszeiten führen kann.

Aufgabe der Erfindung ist es daher, eine Aufzugstür bereitzustellen, die sowohl ein verbessertes Schliessverhalten als auch eine Verkürzung der Schliesszeit bei einem Ausfall der Elektroenergieversorgung aufweist.

Die Aufgabe wird gelöst durch eine Vorrichtung zum Verhindern einer durch einen Kraftspeicher verursachten Übergeschwindigkeit eines Türblattes einer Aufzugstür. Die Vorrichtung weist ein Türblatt, welches zwischen einer Offenposition und einer Geschlossenposition verschiebbar ist, einen mit dem Türblatt gekoppelten Kraftspeicher, welcher Kraftspeicher bei Ausfall der Elektroenergieversorgung die Energie für die Schliessbewegung des Türblattes bereitstellt, einen Türantrieb, der mit dem Türblatt gekoppelt ist, wobei im Türantrieb bei einer Schliessbewegung des Türblattes elektrische Energie induzierbar ist, und eine den Türantrieb ansteuernde Türsteuerung auf, wobei die Türsteuerung zur Regelung der Bewegungsgeschwindigkeit des Türblattes geeignet ist, und wobei die Türsteuerung bei ausgefallener Elektroenergieversorgung mittels der induzierten elektrischen Energie betreibbar ist.

Die Aufgabe wird ebenso gelöst durch eine Aufzugstür mit einer solchen Vorrichtung.

Die Aufgabe wird auch gelöst durch ein Verfahren zum Betreiben einer Aufzugstür mit den Verfahrensschritten:
- bei Ausfall der Elektroenergieversorgung bewirkt ein Kraftspeicher eine Schliessbewegung eines Türblattes, und
- die Schliessbewegung des Türblattes bewirkt eine Induktion von elektrischer Energie in einem Türantrieb, und
- eine Türsteuerung wird bei ausgefallener Elektroenergieversorgung mittels der induzierten elektrischen Energie betrieben.

Der Erfindung liegt die Erkenntnis zugrunde, dass der Kraftspeicher bei einem Stromausfall potentielle Energie zur Schliessung des mindestens einen Türblattes bereitstellt. Das sich demzufolge in die Geschlossenposition beschleunigende Türblatt weist deshalb nach einer bestimmbaren Zeit aufgrund seiner steigenden Geschwindigkeit Energie auf, die einerseits zu hoch ist, andererseits aber genutzt werden kann. Für die Nutzung dieser überschüssigen Energie wird der Umstand genutzt, dass das Türblatt derart mit dem Türantrieb gekoppelt ist, dass der im Wesentlichen durch einen Elektromotor, z.B. ein Permanentmagnetmotor, gebildete Türantrieb durch das Türblatt antreibbar ist. Mit Hilfe dieses Türantriebes kann die überschüssige Energie in elektrische Energie umgewandelt werden. Die derart generierte elektrische Energie wird für eine Aktivierung bzw. für einen Betrieb der Türsteuerung zum Zweck einer kontrollierten Schliessbewegung genutzt, wobei der Betrieb der Türsteuerung möglichst lang aufrechterhalten wird. Zur Aufrechterhaltung des Betriebes der Türsteuerung kann demzufolge der Anteil der potentiellen Energie des Kraftspeichers genutzt werden, der im Falle einer Nichtregulierung eine weitere Geschwindigkeitserhöhung des Türblattes bei der Schliessbewegung verursachen würde. Im Gegensatz zu einer blossen Bremsung des Türblattes kann derart eine schnellstmögliche und schonende Schliessbewegung garantiert werden.

Bei einer Weiterbildung der Vorrichtung ist die Türsteuerung derart ausgebildet, dass die Türsteuerung bei Ausfall der Elektroenergieversorgung die Bewegungsgeschwindigkeit des Türblattes regelt. Bei einer Weiterbildung des Verfahrens führt die Türsteuerung eine Regelung der Bewegungsgeschwindigkeit des Türblattes aus. Eine kontrollierte Schliessbewegung lässt sich mittels der Regelung der Bewegungsgeschwindigkeit des Türblattes erreichen, ohne dass Parameter wie die Masse des Türblattes oder Reibung des Türblattes an anderen Komponenten der Aufzugstür einbezogen werden müssen. Zu diesem Zweck umfasst die Türsteuerung vorzugsweise mindestens ein Geschwindigkeitsinformationssignale erzeugendes Sensorelement, das ein der Geschwindigkeit des Türblattes entsprechendes Signal bei aktivierter Türsteuerung zur Verfügung stellt. Das Sensorelement kann auch derart ausgebildet sein, dass es Positionsinformationssignale erzeugen kann, wodurch ein Signal bereitgestellt werden kann, welches sowohl auf die Geschwindigkeit als auch auf die Position des Türblattes schliessen lässt.

Bei einer Weiterbildung der Vorrichtung ist der Kraftspeicher eine Schliessfeder oder ein Schliessgewicht. Mit Hilfe einer Schliessfeder oder eines Schliessgewichtes ist es möglich, das Türblatt schnellstmöglich zu beschleunigen. Entsprechend kann die Türsteuerung kurz nach Beginn der Schliessbewegung des Türblattes aktiviert werden und die Geschlossenposition des Türblattes schnellstmöglich erreicht werden.

Bei einer Weiterbildung der Vorrichtung ist die Türsteuerung bei einer Aktivierungsgeschwindigkeit des Türblattes aktivierbar. Bei einer Weiterbildung des Verfahrens wird die Türsteuerung bei einer Aktivierungsgeschwindigkeit des Türblattes aktiviert. Wenn das Türblatt eine solche Aktivierungsgeschwindigkeit aufweist, kann die Türsteuerung in die Lage versetzt werden, eine Regelung der Schliessbewegung aufzunehmen. Demnach kann ab diesem Zeitpunkt eine Bremsung der Schliessbewegung des Türblattes erfolgen.

Bei einer Weiterbildung der Vorrichtung ist die Türsteuerung bei einer Bewegungsgeschwindigkeit des Türblattes betreibbar, die gleich oder höher als eine Mindestbewegungsgeschwindigkeit ist. Bei einer Weiterbildung des Verfahrens bewirkt die Türsteuerung die Regelung der Bewegungsgeschwindigkeit grösser oder gleich einer Mindestbewegungsgeschwindigkeit um einen Betrieb der Türsteuerung aufrechterhalten zu können. Die Mindestbewegungsgeschwindigkeit des Türblattes gibt an, welche Geschwindigkeit des Türblattes im Mindesten erforderlich ist, um die Türsteuerung mit elektrischer Energie zu versorgen. Derart kann sichergestellt werden, dass die Türsteuerung längstmöglich betrieben werden kann.

Bei einer Weiterbildung des Verfahrens bewirkt die Regelung der Bewegungsgeschwindigkeit ein Bremsen der beschleunigten Schliessbewegung des Türblattes auf einen bestimmten Wert. Derart können übermässig hohe Bewegungsgeschwindigkeiten des Türblattes verhindert werden.

Im Folgenden wird die Erfindung anhand von Figuren näher erläutert. Es zeigen:
- Figur 1:: eine Aufzugstür einer Aufzugsanlage in einer Offenposition; und
- Figur 2:: einen Geschwindigkeitsverlauf eines Türblattes nach Ausfall der Elektroenergieversorgung.

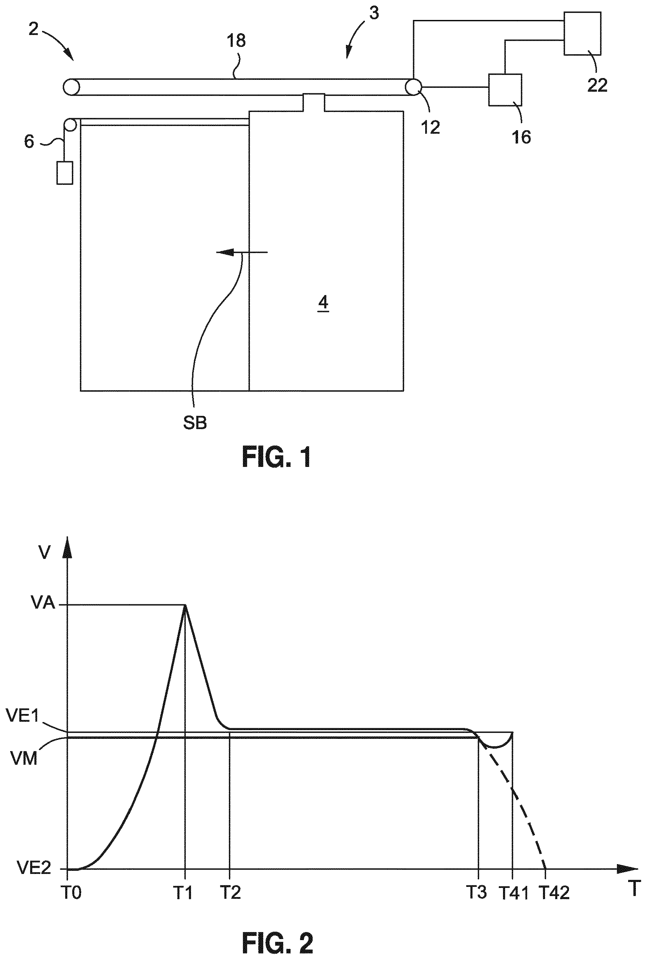

Figur 1 zeigt eine Aufzugstür 2 einer Aufzugsanlage in einer Offenposition mit einer Vorrichtung 3 zum Verhindern einer durch einen Kraftspeicher 6 verursachten Übergeschwindigkeit eines Türblattes 4. Die Vorrichtung 3 umfasst eine Türsteuerung 16, einen Türantrieb 12 und das Türblatt 4, wobei der Türantrieb 12 mit dem Türblatt 4 mittels einer Kopplungsvorrichtung 18 gekoppelt ist. Das Türblatt 4 ist zwischen einer Offenposition und einer Geschlossenposition verschiebbar, vorzugsweise horizontal verschiebbar. Der Türantrieb 12 kann beispielhaft an einer Aufzugskabine der Aufzugsanlage angeordnet sein, wobei das gezeigte Türblatt 4 Bestandteil einer Schachttür sein kann. In einem solchen Fall umfasst die Kopplungsvorrichtung 18 zusätzlich eine bekannte Kabinentür-Schachttür-Kupplung. Bei intakter Elektroenergieversorgung wird üblicherweise sowohl die Türsteuerung 16 als auch der Türantrieb 12 von einer Elektroenergiequelle 22 mit Energie versorgt. Die Vorrichtung 3 umfasst weiterhin einen Kraftspeicher 6, der mit dem Türblatt 4 gekoppelt ist bzw. verbunden sein kann. Der Kraftspeicher 6 dient dem Bereitstellen einer Schliesskraft, um die Aufzugstür 2 beispielsweise bei ausgefallener Elektroenergieversorgung zu schliessen und derart Sicherheit der Aufzugsanlage zu gewährleisten. Dem Kraftspeicher 6 wird üblicherweise durch ein Verschieben des mit dem Kraftspeicher 6 verbundenen Türblattes 4 in die Offenposition potentielle Energie zugeführt. Die derart gespeicherte Energie bewirkt konkreterweise, dass das Türblatt 4 die Schliessbewegung SB ausführt, wenn dieser Schliesskraft und damit der Schliessbewegung SB beispielhaft ein Haltemoment des Türantriebes 4 nicht mehr entgegensteht.

Figur 2 zeigt einen Geschwindigkeitsverlauf eines gemäss Figur 1 gezeigten Türblattes, wobei eine Bewegungsgeschwindigkeit V des Türblattes über der Zeit T abgebildet ist.

Zu einem Elektroenergieausfallzeitpunkt T0 fällt die Elektroenergieversorgung aus, wobei das Türblatt sich nicht in der Geschlossenposition der Aufzugstür befindet. Alternativ zur in der Figur 2 gezeigten Variante kann die Geschwindigkeit des Türblattes zum Elektroenergieausfallzeitpunkt T0 ungleich Null sein. Das heisst, dass die Elektroenergieversorgung während einer Türschliessbewegung oder Türöffnungsbewegung ausfallen kann. Der Ausfall der Elektroenergieversorgung bewirkt ebenso eine Deaktivierung der Türsteuerung. Zudem wird das Türblatt aufgrund des fehlenden Haltemomentes, welches der Türantrieb bei intakter Elektroenergieversorgung auf das Türblatt ausübt, bis zu einem Aktivierungszeitpunkt T1 durch eine Schliesskraft beschleunigt. Diese Schliesskraft wird mittels des gezeigten Kraftspeichers erzeugt, welcher mit einem Türblatt gekoppelt ist. Während dieser Beschleunigungsphase wird im Türantrieb eine mit der Zeit T ansteigende elektrische Energie induziert, die jedoch noch keine aktivierte Türsteuerung verursachen kann, weil die durch den Türantrieb induzierte elektrische Energie für die Aktivierung der Türsteuerung noch nicht ausreicht oder ein Einschaltvorgang der Türsteuerung noch nicht abgeschlossen ist.

Bei Erreichen des Aktivierungszeitpunktes T1 weist das Türblatt eine Aktivierungsgeschwindigkeit VA auf, bei der die Türsteuerung in einen Betriebszustand versetzt bzw. aktiviert wird. Die aktivierte Türsteuerung ist derart ausgebildet, dass sie eine Regelung der Bewegungsgeschwindigkeit V des Türblattes bewirkt. Zu diesem Zweck umfasst die Türsteuerung mindestens einen Sensor oder einen Encoder. Der Sensor bzw. der Encoder erzeugt Geschwindigkeitsinformationssignale, die auf eine Geschwindigkeit des Türblattes schliessen lassen. Die Regelung der Bewegungsgeschwindigkeit V kann beispielhaft mittels eines PI-Reglers erfolgen. Die Türsteuerung bremst die Schliessbewegung des Türblattes, um beispielsweise eine der entsprechenden gesetzlichen Norm überhöhte kinetische Energie des Türblattes abzubauen. Ausgehend vom Aktivierungszeitpunkt T1 bis zu einem Zeitpunkt T2 wird das Türblatt demnach auf eine Bewegungsgeschwindigkeit V gebremst, die gleich oder höher als eine Mindestbewegungsgeschwindigkeit VM ist.

Alternativ dazu kann die Regelung der Bewegungsgeschwindigkeit V dahingehend erfolgen, dass lediglich eine weitere Steigerung dieser Bewegungsgeschwindigkeit V verhindert wird.

Ein diesen Alternativen entgegenstehendes Absenken der Bewegungsgeschwindigkeit V unter diese Mindestbewegungsgeschwindigkeit VM bewirkt, dass die durch den Türantrieb induzierte elektrische Energie nicht mehr ausreicht, die Türsteuerung im Betriebszustand zu halten. Dieses Unterschreiten der Mindestbewegungsgeschwindigkeit VM soll vorzugsweise so lang wie möglich verhindert werden, weil ohne zusätzliche Massnahmen ein solches Unterschreiten eine Deaktivierung der Türsteuerung und somit eine erneute Beschleunigung des Türblattes bis zur Wiederaktivierung der Türsteuerung verursacht.

Zwischen dem Zeitpunkt T2 und einem darauffolgenden Deaktivierungszeitpunkt T3 ist die Bewegungsgeschwindigkeit V derart geregelt, dass die Mindestbewegungsgeschwindigkeit VM nicht unterschritten wird.

Das Türblatt kann bei Erreichen der Geschlossenposition des Türblattes abrupt abgebremst werden, was zu einer Deaktivierung der Türsteuerung im Deaktivierungszeitpunkt T3 führt. Ein solches abruptes Abbremsen ist jedoch nicht problematisch, weil die kinetische Energie des Türblattes durch die vorangegangene Regelung bereits genügend minimiert ist. Andererseits kann die Bewegungsgeschwindigkeit V zum Deaktivierungszeitpunkt T3 durch Regelung der Türsteuerung unter die Mindestbewegungsgeschwindigkeit VM abgesenkt werden, wenn das Türblatt die Geschlossenposition erreicht hat bzw. nahezu erreicht hat. Um eine solche Regelung vor Erreichen der Geschlossenposition zu ermöglichen, umfasst die Türsteuerung ein Sensorelement zur Erzeugung eines Positionsinformationssignals. Folglich kann durch den Türantrieb nicht mehr genügend elektrische Energie generiert werden, um die Türsteuerung im Betriebszustand zu halten. Mit einer solchen Regelung der Bewegungsgeschwindigkeit V ist es beispielhaft möglich, dass das Türblatt schon zum Deaktivierungszeitpunkt T3 die Geschlossenposition einnimmt, was ebenso zu einer abrupten Abbremsung des Türblattes führt.

Alternativ zu dieser geregelten Absenkung der Bewegungsgeschwindigkeit V ist es möglich, dass die potentielle Energie des Kraftspeichers nicht mehr ausreicht, sowohl die Bewegungsgeschwindigkeit V des Türblattes, welche mindestens die Mindestbewegungsgeschwindigkeit VM ist, als auch die Bereitstellung der elektrischen Energie zum Betrieb der Türsteuerung aufrechtzuerhalten. Ein derartiges Verhalten ist beispielhaft möglich, wenn eine Schliessfeder als Kraftspeicher verwendet wird.

Nach der Deaktivierung der Türsteuerung ist es möglich, dass das Türblatt durch den Kraftspeicher wieder beschleunigt wird. Dies ist der Fall, wenn der Deaktivierungszeitpunkt T3 eintritt, bevor das Türblatt vollständig geschlossen ist. Weil innert kurzer Zeit die Geschlossenposition des Türblattes mit einer Endbewegungsgeschwindigkeit VE1 zu einem Schliesszeitpunkt T41 erreicht werden wird und demnach eine beispielhaft maximale nicht zu überschreitende Geschwindigkeit gar nicht erreichen kann, sind möglicherweise keine weiteren Bremsmassnahmen erforderlich. Die erwähnte maximal nicht zu überschreitende Geschwindigkeit kann durch ein Mass der kinetischen Energie des Türblattes bestimmt sein, welches im Hinblick auf gesetzliche Normen nicht überschritten werden darf. Trotz dessen wird das Türblatt bei Erreichen seiner Geschlossenposition abrupt abgebremst. Ein solches abruptes Abbremsen ist jedoch nicht problematisch, weil die kinetische Energie des Türblattes durch die vorangegangene Regelung bereits genügend minimiert ist.

Alternativ dazu kann der Türantrieb Komponenten, beispielhaft mechanische Puffer, aufweisen, die eine fortgeführte Abbremsung des Türblattes trotz nicht aktivierter Türsteuerung ermöglichen. In Figur 2 ist ein Verlauf der Bewegungsgeschwindigkeit V gemäss dieser Alternative nach Deaktivierung der Türsteuerung durch eine gestrichelte Linie dargestellt. Bei Ausführung dieser Alternative kann das Türblatt zu einem Schliesszeitpunkt T42 eine Endbewegungsgeschwindigkeit VE2 gleich Null aufweisen.

Sowohl der Aktivierungszeitpunkt T1 als auch der Deaktivierungszeitpunkt T3 können von der Federkonstante, welche im Falle einer als Kraftspeicher verwendeten Schliessfeder gilt, und von Parametern der Aufzugstür abhängig sein. Solche Parameter der Aufzugstür sind beispielsweise die Masse des Türblattes und die für den Türantrieb geltenden Kennzahlen.

## Patentansprüche

1. Vorrichtung zum Verhindern einer durch einen Kraftspeicher (6) verursachten Übergeschwindigkeit eines Türblattes (4), die Vorrichtung aufweisend:
- ein Türblatt (4), welches zwischen einer Offenposition und einer Geschlossenposition verschiebbar ist
- einen mit dem Türblatt (4) gekoppelten Kraftspeicher (6), welcher Kraftspeicher (6) bei Ausfall der Elektroenergieversorgung die Energie für die Schliessbewegung (SB) des Türblattes (4) bereitstellt,
- einen Türantrieb (12), der mit dem Türblatt (4) gekoppelt ist, wobei im Türantrieb (12) bei einer Schliessbewegung des Türblattes (4) elektrische Energie induzierbar ist,
- eine den Türantrieb (12) ansteuernde Türsteuerung (16), die zur Regelung der Bewegungsgeschwindigkeit (V) des Türblattes (4) geeignet ist, **dadurch gekennzeichnet, dass** die Türsteuerung (16) bei ausgefallener Elektroenergieversorgung mittels der induzierten elektrischen Energie betreibbar ist.

2. Vorrichtung nach Anspruch 1, wobei die Türsteuerung (16) derart ausgebildet ist, dass die Türsteuerung (16) bei Ausfall der Elektroenergieversorgung die Bewegungsgeschwindigkeit (V) des Türblattes (4) regelt.

3. Vorrichtung nach einem der vorangegangenen Ansprüche, wobei der Kraftspeicher (6) eine Schliessfeder oder ein Schliessgewicht ist.

4. Vorrichtung nach einem der vorangegangenen Ansprüche, wobei die Türsteuerung (16) bei einer Aktivierungsgeschwindigkeit (VA) des Türblattes (4) aktivierbar ist.

5. Vorrichtung nach einem der vorangegangenen Ansprüche, wobei die Türsteuerung (16) bei einer Bewegungsgeschwindigkeit (V) des Türblattes (4) betreibbar ist, die gleich oder höher als eine Mindestbewegungsgeschwindigkeit (VM) ist.

6. Vorrichtung nach einem der vorangegangenen Ansprüche, wobei der Türantrieb (12) durch einen Elektromotor, vorzugsweise einen Permanentmagnetmotor, gebildet ist.

7. Verfahren zum Betreiben einer Aufzugstür (2) mit den Verfahrensschritten:
- bei Ausfall der Elektroenergieversorgung bewirkt ein Kraftspeicher (6) eine Schliessbewegung (SB) eines Türblattes (4), und
- die Schliessbewegung (SB) des Türblattes (4) bewirkt eine Induktion von elektrischer Energie in einem Türantrieb (12), und
- eine Türsteuerung (16) wird bei ausgefallener Elektroenergieversorgung mittels der induzierten elektrischen Energie betrieben.

8. Verfahren nach Anspruch 7, wobei die Türsteuerung (16) eine Regelung der Bewegungsgeschwindigkeit (V) des Türblattes (4) ausführt.

9. Verfahren nach einem der Ansprüche 7 oder 8, wobei die Türsteuerung (16) bei einer Aktivierungsgeschwindigkeit (VA) des Türblattes (4) aktiviert wird.

10. Verfahren nach einem der Ansprüche 7 bis 9, wobei die Regelung der Bewegungsgeschwindigkeit (V) ein Einbremsen der beschleunigten Schliessbewegung (SB) des Türblattes (4) bewirkt.

11. Verfahren nach einem der Ansprüche 7 bis 10, wobei die Türsteuerung (16) die Regelung der Bewegungsgeschwindigkeit (V) grösser oder gleich einer Mindestbewegungsgeschwindigkeit (VM) bewirkt, um einen Betrieb der Türsteuerung (16) aufrechterhalten zu können.

12. Aufzugstür (2) mit einer Vorrichtung zum Verhindern einer durch einen Kraftspeicher (6) verursachten Übergeschwindigkeit eines Türblattes (4) nach einem der Ansprüche 1 bis 6.

## Claims

1. Device for preventing excess speed, which is caused by an energy store (6), of a door leaf (4), the device comprising:
- a door leaf (4) displaceable between an open position and a closed position,
- an energy store (6) coupled with the door leaf (4), which energy store (6) provides energy for the closing movement (SB) of the door leaf in the event of failure of the electrical energy supply,
- a door drive (12) coupled with the door leaf (4), wherein electrical energy can be induced in the door drive (12) when closing movement of the door leaf (4) takes place, and
- a door control (16), which actuates the door drive (12) and which is suitable for regulation of the speed (V) of movement of the door leaf (4),
**characterised in that** the door control (16) is operable by means of the induced electrical energy when the electrical energy supply fails.

2. Device according to claim 1, wherein the door control (16) is so constructed that the door control (16) regulates the movement speed (V) of the door leaf (4) when failure of the electrical energy supply occurs.

3. Device according to one of the preceding claims, wherein the energy store (6) is a closing spring or a closing weight.

4. Device according to any one of the preceding claims, wherein the door control (16) is activatable in the case of an activation speed (VA) of the door leaf (4).

5. Device according to any one of the preceding claims, wherein the door control (16) is operable in the case of a movement speed (V), which is equal to or higher than a minimum movement speed (VM), of the door leaf (4).

6. Device according to any one of the preceding claims, wherein the door drive (12) is formed by an electric motor, preferably a permanent magnet motor.

7. Method of operating a lift door (2), comprising the method steps:
- an energy store (6) produces a closing movement (SB) of a door leaf (4) when the electrical energy supply fails,
- the closing movement (SB) of the door leaf (4) causes induction of electric energy in a door drive (12) and
- a door control (16) is operated by means of the induced electrical energy when the electrical energy supply fails.

8. Method according to claim 7, wherein the door control (16) executes regulation of the movement speed (V) of the door leaf (4).

9. Method according to one of claims 7 and 8, wherein the door control (16) is activated in the case of an activation speed (VA) of the door leaf (4).

10. Method according to any one of claims 7 to 9, wherein the regulation of the movement speed (V) produces braking of the accelerated closing movement (SB) of the door leaf (4).

11. Method according to any one of claims 7 to 10, wherein the door control (16) causes regulation of the movement speed (V) to be greater than or equal to a minimum movement speed (VM) so as to be able to maintain operation of the door control (16).

12. Lift door (2) with a device for preventing excess speed, which is caused by an energy store (6), of a door leaf (4) according to any one of claims 1 to 6.

## Revendications

1. Dispositif pour empêcher une vitesse excessive d'un vantail de porte (4) provoquée par un accumulateur d'énergie (6), le dispositif comportant :
- un vantail de porte (4) qui est apte à coulisser entre une position ouverte et une position fermée,
- un accumulateur d'énergie (6) accouplé au vantail (4), lequel accumulateur d'énergie (6), en cas de panne d'alimentation en énergie électrique, fournit l'énergie pour le mouvement de fermeture (SB) du vantail (4),
- un entraînement de porte (12) qui est accouplé au vantail (4), de l'énergie électrique étant apte à être induite dans l'entraînement de porte (12) lors d'un mouvement de fermeture du vantail (4),
- une commande de porte (6) qui commande l'entraînement de porte (12) et qui est apte à régler la vitesse de mouvement (V) du vantail (4),
**caractérisé en ce que** la commande de porte (16), en cas de panne d'alimentation en énergie électrique, est apte à fonctionner à l'aide de l'énergie électrique induite.

2. Dispositif selon la revendication 1, la commande de porte (16) étant conçue pour régler la vitesse de mouvement (V) du battant de porte (4) en cas de panne d'alimentation en énergie.

3. Dispositif selon l'une des revendications précédentes, l'accumulateur d'énergie (6) étant un ressort de fermeture ou un poids de fermeture.

4. Dispositif selon l'une des revendications précédentes, la commande de porte (16) étant apte à être activée en présence d'une vitesse d'activation (VA) du battant de porte (4).

5. Dispositif selon l'une des revendications précédentes, la commande de porte (16) étant apte à fonctionner en présence d'une vitesse de mouvement (V) du battant de porte (4) qui est supérieure ou égale à une vitesse de mouvement minimale (VM).

6. Dispositif selon l'une des revendications précédentes, l'entraînement de porte (12) étant formé par un moteur électrique, de préférence un moteur à aimant permanent.

7. Procédé pour le fonctionnement d'une porte d'ascenseur (2), avec les étapes de procédé suivantes:
- en cas de panne d'alimentation en énergie, un accumulateur d'énergie (6) provoque un mouvement de fermeture (SB) d'un vantail de porte (4), et
- le mouvement de fermeture (SB) du vantail (4) provoque une induction d'énergie électrique dans un entraînement de porte (12), et
- une commande de porte (16) fonctionne, en cas de panne d'alimentation en énergie électrique, à l'aide de l'énergie électrique induite.

8. Procédé selon la revendication 7, selon lequel la commande de porte (16) exécute un réglage de la vitesse de mouvement (V) du vantail de porte (4).

9. Procédé selon l'une des revendications 7 ou 8, selon lequel la commande de porte (16) est activée en présence d'une vitesse d'activation (VA) du battant de porte (4).

10. Procédé selon l'une des revendications 7 à 9, selon lequel le réglage de la vitesse de mouvement (V) provoque un freinage du mouvement de fermeture (SB) accéléré du vantail de porte (4).

11. Procédé selon l'une des revendications 7 à 10, selon lequel la commande de porte (16) provoque le réglage de la vitesse de mouvement (V) supérieure ou égale à une vitesse de mouvement minimale (VM), afin de pouvoir maintenir un fonctionnement de la commande de porte (16).

12. Porte d'ascenseur (2) avec un dispositif pour empêcher une vitesse excessive d'un vantail de porte (4) provoquée par un accumulateur d'énergie (6), selon l'une des revendications 1 à 6.
